# EUROPEAN PATENT SPECIFICATION

(11) **EP 4 342 725 B1**
(45) Date of publication and mention of the grant of the patent: **06.08.2025**
(21) Application number: 23198361.0
(22) Date of filing: 19.09.2023
(51) Int. Cl.: B60L 58/13, B60L 15/20, B60L 7/18, B60L 7/26, B60L 58/16

(54) **ENERGY MANAGEMENT SYSTEM FOR A BATTERY ELECTRIC VEHICLE**
ENERGIEVERWALTUNGSSYSTEM FÜR EIN BATTERIEELEKTROFAHRZEUG
SYSTÈME DE GESTION D'ÉNERGIE POUR UN VÉHICULE ÉLECTRIQUE À BATTERIE

(30) Priority: 20.09.2022 NL 2033082
(43) Date of publication of application: 27.03.2024
(73) Proprietor: DAF Trucks N.V., 5643 TW Eindhoven (NL)
(72) Inventor: NIEVELSTEIN, Mark Martha Jozef, 5643 TW Eindhoven (NL); BROEDERS, Johannes Baptist Wilhelmus Bernardus Maria, 5643 TW Eindhoven (NL); VAN ECK, Aart-Jan, 5643 TW Eindhoven (NL); LO-A-NJOE, Rick, 5643 TW Eindhoven (NL)
(74) Representative: V.O.

(56) References cited:
- DE-A1- 102014 219 658
- US-A1- 2013 197 730

## Description

### FIELD OF INVENTION

The invention relates to a battery control device in a vehicle. The invention also relates to a method of controlling a setpoint for a state of charge in a battery for a vehicle. The invention further relates to a computer program product for putting into effect the method.

### DESCRIPTION OF THE PRIOR ART

Recently battery electric vehicles are becoming mainstream solutions to counter the emission effects of combustion engines, in particular in densely populated areas. Battery Electric Vehicles, BEV, typically make use of regenerative braking by transforming the brake energy generated in the E-motor into electric energy that is transported back to the battery. In this way the vehicle operation range can be extended and the electric energy consumption can be optimized. However, when the battery is fully charged (100% State-of-Charge) the braking energy cannot be recuperated and, as a result, regenerative braking is not possible.

However heavy vehicles need to comply with legislation that regulates the heavy vehicle braking requirements that does not allow the use of foundation (friction) brakes for downhill endurance braking. This basically forced these vehicles to a mandatory equipment of an additional regenerative braking system. Recently this legislation was amended for BEV vehicles with allowance of the foundation brakes but with very high demands for nowadays foundation brakes. For this reason BEV vehicles also required such an additional braking system (e.g. brake resistor) to maintain endurance braking performance in case the battery is fully loaded. The negative effect is that the additional braking system adds weight and costs to the BEV vehicle and also needs an additional cooling system to transfer the heat generated by the additional braking system to the outside air.

It is known to charge a battery according to an altitude specific charging protocol. For instance JP 2001-095105 A discloses a method for controlling the charge rate of a battery using an altitude. An average value of the altitudes in the travelling section around the current geographical location is calculated to determine whether the road on which the vehicle is traveling is uphill or downhill by comparing the average value with the current altitude. Charging is controlled so as to change the target value, the upper limit value, or the lower limit value of the charge rate of the battery depending on the difference between the average value and the current altitude.

However, many of these protocols are dependent on route information and complicated calculations, that may in the end not be entirely robust against situations where map information is not accurate or up to date.

An other examples for the prior art are given in US 2013 197730 A1 and in DE10 2014 219658 A1 that both use the altitude for setting a maximum state of charge.

The invention aims for an alternative solution that limit the necessity for an additional braking system of a brake resistor and additional cooling circuit and using altitude information in an efficient manner.

### SUMMARY OF THE INVENTION

In one aspect, it is aimed to provide an energy management system for an BEV vehicle comprising an electric powertrain powered by an electric battery. The energy management system comprises a state of charge (SOC) setpoint controller. The SOC setpoint controller arranged to control, when charging the battery, a maximum charge level of the battery in dependence of an orthometric height, in order to free up battery capacity to compensate for potential energy to be stored in the battery due to regenerative braking. According to the invention the SOC setpoint is controlled in dependence of a lookup map that couples the actual vehicle altitude to a SOC setpoint, wherein the lookup map is provided with a lookup function that determines the maximum charge level at 100 % when the vehicle is in range below a first altitude level; wherein the lookup function lowers the SOC setpoint dependent on the altitude of the vehicle when the vehicle is above the first altitude level; and wherein the lookup function keeps the SOC setpoint at a constant value, when the vehicle is above a second altitude level the SOC setpoint, the second altitude determined by a maximum altitude descent that is available for the.BEV vehicle

The lookup map is an effective way not to use the high computing effort needed for geofencing but to use a pre analysis of existing slopes starting on the altitude the vehicle is charged. This will result in a conservative reservation of energy but more optimized than a fixed value. The table is based on the required amount of free energy at a certain altitude to be able to have a predefined endurance braking performance available during the descent if needed. For that reason, the energy reservation could increase up to 71 kWh (1200m descent) at 1600m altitude which is sufficient for covering worst-case downhill situations. Above that altitude the reservation will remain constant as there are no descents possible requiring more continues braking energy recovery.

In this way a battery range may be pre-set while at the same time maximizing energy recovery and/or battery lifetime optimization, in view of an actual maximum descent that is available for a truck when driving.

### BRIEF DESCRIPTION OF THE DRAWINGS

The invention will be further elucidated in the figures:
Figure 1 shows an energy management system including a SOC setpoint controller controlling a maximum charge level of the battery;
Figure 2 shows a further elaboration on the state of charge controller;
Figure 3 shows an exemplary lookup function for a SOC controller.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

The processor may be a dedicated processor for performing in accordance with the present system or may be a general-purpose processor wherein only one of many functions operate for performing in accordance with the present system. The processor may operate utilizing a program portion, multiple program segments, or may be a hardware device utilizing a dedicated or multi-purpose integrated circuit. Any type of processor may be used such as a dedicated or shared one. The processor may include microcontrollers, central processing units (CPUs), digital signal processors (DSPs), ASICs, or any other processor(s) or controller(s) such as digital optical devices, or analog electrical circuits that perform the same functions, and employ electronic techniques and architecture. The controller or processor may further comprise a memory that may be part of or operationally coupled to the controller. The memory may be any suitable type of memory where data is stored. Any medium known or developed that can store and/or transmit information suitable for use with the present systems and methods may be used as a memory. The memory may also store user preferences and/or application data accessible by the controller for configuring it to perform operational acts in accordance with the present systems and methods.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the text to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the invention as defined in the claims. The specification and drawings are accordingly to be regarded in an illustrative manner and are not intended to limit the scope of the invention as defined in the claims.

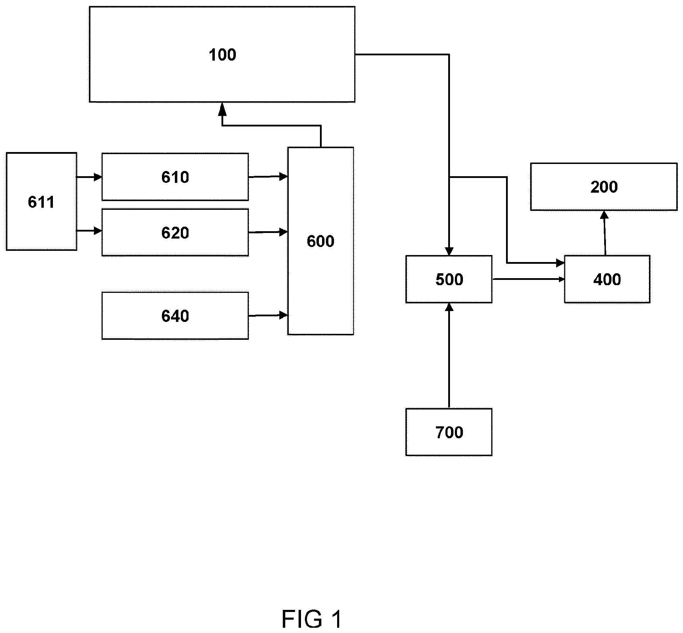

Turning to Figure 1 there is disclosed a conventional energy management system wherein a SOC setpoint controller has a fixed setpoint. In such a system energy management system 100 for a battery electric vehicle 200 comprising an electric powertrain of an electric motor 400 powered by an electric battery 500. The energy management system 100 has a state of charge (SOC) setpoint controller 600 that in this case controls the battery 500 to a setpoint for a state of charge (SOC) of the electric battery 500 when charged by charging station 700. The SOC setpoint controller 600 has a controlled setpoint which is variable, to which end a data port 610, 620 is available to the SOC setpoint controller 600, for receiving actual altitude data of the vehicle 200. SOC setpoint controller 600 is arranged to calculate the SOC setpoint to control, when charging the battery 500, a maximum charge level of the battery in dependence of altitude, in order to free up battery capacity to compensate for potential energy to be stored in the battery due to regenerative braking.

Data port 610 may be associated with an input device 611 that receives the altitude data, e.g. a GPS device or a altitude meter.

The data port 620 may be additionally associated with a GPS controller. The vehicle model of this basic algorithm does not necessarily rely on additional preview information, e.g. no forecast is made about the traffic situation nor environmental conditions; however the state of charge setpoint controller 600 may be provided with additional data 640 that enables SOC setpoint controller 600 to further calculate the SOC setpoint as a function of e.g. an actual geographical location, e.g. in accordance with GPS data of a terrain, and thus take into account the extra or lesser amount of electrical power required, when driving along a preset route or a maximum descent within a certain geographic perimeter of the vehicle. In another aspect, additional data 640 may include actual vehicle state data including parameters that influence the actual energy consumption of the battery. These may include the ambient temperature, weight of the vehicle, payload of the vehicle, and vehicle configuration (amount of tyres axles etc) but also may include an energy budget of additional non-motor electrical utilities (e-auxiliaries, e-power take off). Thus, the energy management system 100 may control additional electric power supply for powering additional non-motor electrical utilities such as an air conditioner, cooler heater, or other electrical devices. The energy management system may be further communicatively coupled to the electric motor 400, in order to limit a maximum brake force when an actual state of charge of the battery is above a maximum charge level controlled by the setpoint controller. Thus, in addition to battery reservation at charging, also the actual orthometric height info can be used for limitation of the regenerative braking power while driving considering the actual state-of-charge of the batteries. This limitation could for instance be set on the minimum legally required level when during driving the available battery storage capacity drops below the minimal required level. In this way the driver will be forced to balance his braking behaviour between using the foundation brakes and using the regenerative braking system in order to avoid the situation where there is no regenerative braking available anymore while downhill driving.

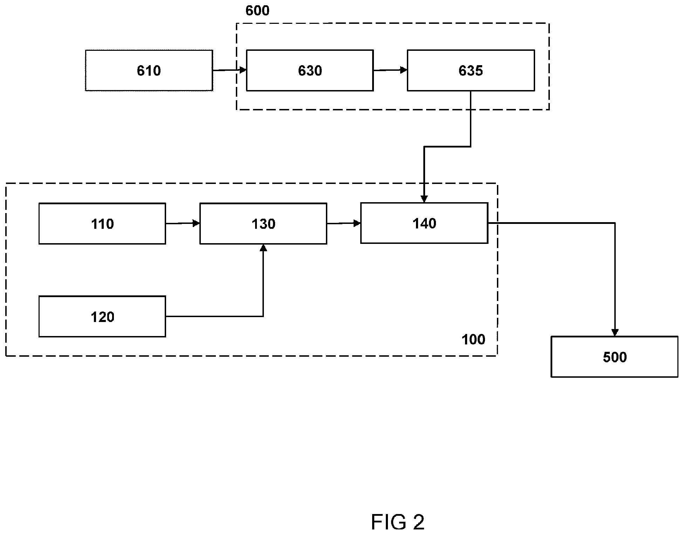

In more detail, SOC controller 600 is illustrated in Figure 2. In the Figure, altitude data 610 are provided, e.g. from a GPS device, so that the SOC setpoint controller calculates the SOC setpoint as a function of an actual geographical location determined by a geographical location controlleraltitude. In this case the lookup function is dependent on an actual geographical location determined by the GPS device, which is able to retrieve the altitude of the vehicle based on the geographical location. Based on an energy reservation lookup-map 630 the altitude data is converted into a SOC setpoint 635, which is provided to the energy management system 100, where the controller 600 may or may not be part of. The energy management system 100 further comprises actual battery data 110 such as a State of Health (SoH) data 110 which affects an actual percentage of the total kWh battery configuration data 120. Accordingly the SOC setpoint is compensated by a state of battery health parameter 110, indicative of the potential free battery capacity 130, which may be e.g. 90% of a 400 kWh configuration. The SOC controller 600 determines an amount of free battery capacity in order to compensate for potential energy to be stored in the battery due to regenerative braking, which may be for instance 50 kWh at a altitude level of 1000 m. This amount is subtracted from the actual available total kWh, and thus determines the max allowed SoC. 140, which is communicated to the battery controller 500 and/or charging station 700. Consequently, when the maximum allowed State of Charge is reached, the charging station is instructed to stop charging of battery 500.

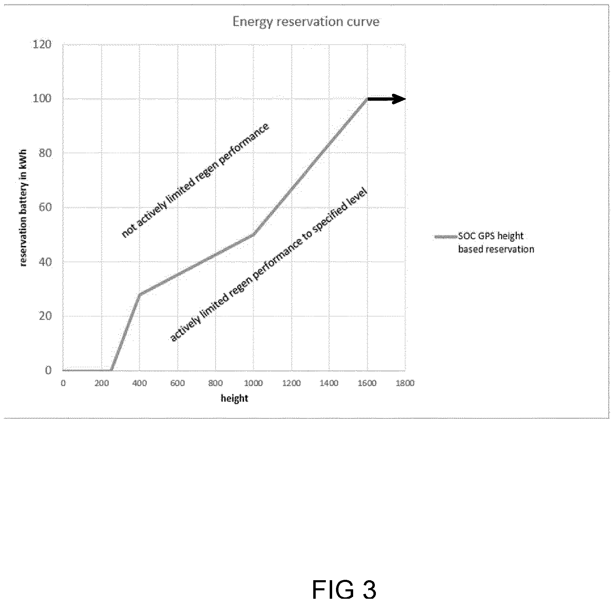

Figure 3 shows an exemplary representation of an energy reservation look-up map 630, such as used in Figure 2. A lookup function determines the required free capacity at 0 kWh up toan initial altitude level, for example, for altitude levels of the vehicle below 200 m, which may be plus or minus 100 m, e.g. 250 m. The lookup function may be provided in the form of a lookup table, e.g. lookup map. Below this initial level a maximum charge level of the battery can be maintained at 100 %. At subsequent altitude levels, e.g. above the first altitude level of e.g. 250m, the lookup function lowers the SOC setpoint dependent on the altitude of the vehicle in a proportional manner. Below 250 m altitude no additional braking energy is needed as the foundation brakes of the vehicle are capable of providing sufficient (endurance) braking performance without getting overheated according to the ECE R13 Type II test conditions. In this example, for altitudes above the 250 meter up to 1600m an energy reservation will be made to reduce the load on the brakes and to increase the endurance braking capability beyond the legal requirement. As can be gleaned from the curve, in this proportional range altitude ranges can be provided with different proportional charge levels, e.g. up to a first altitude range between the first and an intermediate altitude level the SOC setpoint may be lowered at a higher altitude rate than for a second altitude level range varying between the intermediate level and further, second level. When the vehicle is above the second altitude level the lookup function keeps the SOC setpoint at a constant value. It is the inventive insight that above the second altitude the amount of free capacity is only determined by a maximum altitude descent that is available for the BEV vehicle, which is constant. Preferably, this second altitude level is a fixed value that is not updated during driving, which makes calculation efficient and robust and does not require a complicated map-coordinate based protocol for the charging the battery. For a limited number of geographical locations the lookup map that couples the actual vehicle altitude to a SOC setpoint can be selectively changed. In this way a vehicle can adapt to a local situation, where it is safe to adjust the SOC setpoint without risk that the battery capacity is insufficient.

In the example, the intermediate altitude level may be in a range between 350 and 450m. The second altitude level may be above 1600 meters, e.g. the second altitude level may be in a range between 1500 and 1700 m.

## Claims

1. An energy management system (100) for an battery electric vehicle, BEV, (100) comprising an electric powertrain powered by an electric battery (500), said energy management system comprising a state of charge (SOC) setpoint controller (600), said SOC setpoint controller arranged to control, when charging the battery, a maximum charge level of the battery in dependence of an orthometric altitude, in order to keep free battery capacity to compensate for potential energy to be stored in the battery due to regenerative braking, wherein the SOC setpoint is controlled in dependence of a lookup map (630) that couples the actual vehicle altitude to a SOC set point (635), **characterized in that** the lookup map is provided with a lookup function that determines the maximum charge level at 100 % when the vehicle is in range below a first altitude level; wherein the lookup function lowers the SOC setpoint dependent on the altitude of the vehicle when the vehicle is above the first altitude level; and wherein the lookup function keeps the SOC setpoint at a constant value, when the vehicle is above a second altitude level the SOC setpoint, the second altitude determined by a maximum altitude descent that is available for the BEV vehicle.

2. The energy management system according to claim 1, wherein the second altitude level is a fixed value that is not updated during driving.

3. The energy management system according to claim 1, wherein the first altitude level is dependent on a friction brake capacity.

4. The energy management system according to any preceding claim, wherein, when the vehicle is above the first altitude level, a maximum brake force is reduced when an actual state of charge of the battery is above a maximum charge level controlled by the setpoint controller.

5. An energy management system according to any preceding claim, wherein the first altitude level is in a range between 50 and 300 m.

6. An energy management system according to any preceding claim, wherein the second altitude level is in a range between 1500 and 1700 m.

7. An energy management system according to any preceding claim, wherein the SOC setpoint is compensated by a state of battery health parameter, indicative of the potential free battery capacity.

8. An energy management system according to any preceding claim, wherein, when the vehicle is between the first and second altitude, the SOC setpoint is lowered at a fixed altitude rate.

9. An energy management system according to claim 6, wherein for a first altitude range between the first and a third altitude level, said third level in between first and second altitude levels, the SOC setpoint is lowered at a higher altitude rate than for a second altitude level range varying between the third and second altitude level.

10. An energy management system according to claim 9, wherein the third altitude level is in a range between 350 and 450m.

11. The energy management system according to any preceding claim, wherein the lookup function is dependent on an actual geographical location determined by a geographical location controller.

12. The energy management system according to claim 11, wherein the geographical location is related to a altitude map to determine the altitude of the vehicle based on the geographical location.

13. The energy management system according to claim 11 or 12, wherein the lookup map that couples the actual vehicle altitude to a SOC setpoint can be selectively changed for a predetermined number of geographical locations.

14. The energy management system according to any preceding claim, wherein the SOC setpoint controller further calculates the SOC setpoint as a function of an actual vehicle state determined by a vehicle state controller including any of an indication of ambient temperature, weather conditions, weight of vehicle, payload of vehicle, vehicle axle configuration, rolling resistance, air drag, expected vehicle speed, expected plug-in time, expected GPS trajectory, expected locations of green zones, expected locations for plug-in charging stations, expected type of road, expected road conditions, or other attributes related to characterization of road and plug-in charging station; indication of usable energy capacity of rechargeable energy source, data on charging and discharging power capabilities of energy rechargeable energy source, efficiency data for charging/discharging rechargeable energy source, temperature of rechargeable energy source, or other attributes related to characterization of rechargeable energy source.

15. The energy management system according to claim 12, further arranged to control an energy budget of additional non-motor electrical utilities including any of an electric steering system, electric air compressor, cabin heating/cooling system, pumps and fans from a vehicle thermal system, or energy consumption of other auxiliaries addressing also optional electric loads for specific vehicle purposes like cooling unit for refrigerated transport and waste collector units.

## Patentansprüche

1. Energiemanagementsystem (100) für ein batterieelektrisches Fahrzeug, BEV, (100) umfassend einen von einer elektrischen Batterie (500) mit Energie versorgten elektrischen Antriebsstrang, wobei das Energiemanagementsystem einen Ladezustandssollwertregler (600) umfasst, wobei der Ladezustandssollwertregler dazu angeordnet ist, beim Laden der Batterie einen maximalen Ladezustand der Batterie in Abhängigkeit von einer orthometrischen Höhe zu regeln, um Batteriekapazität für die Kompensation potenzieller Energie frei zu halten, die aufgrund von regenerativem Bremsen in der Batterie gespeichert werden soll, wobei der Ladezustandssollwert in Abhängigkeit von einer Suchkarte (630) geregelt wird, die die tatsächliche Höhenlage des Fahrzeugs mit einem Ladezustandssollwert (635) verknüpft, **dadurch gekennzeichnet, dass** die Suchkarte mit einer Suchfunktion versehen ist, die den maximalen Ladezustand auf 100 % festlegt, wenn sich das Fahrzeug in einer Reichweite unterhalb eines ersten Höhenniveaus befindet; wobei die Suchfunktion den Ladezustandssollwert abhängig von der Höhenlage des Fahrzeugs absenkt, wenn sich das Fahrzeug oberhalb des ersten Höhenniveaus befindet; und wobei die Suchfunktion den Ladezustandssollwert auf einem konstanten Wert hält, wenn sich das Fahrzeug oberhalb eines zweiten Höhenniveaus für den Ladezustandssollwert befindet, wobei die zweite Höhe durch eine maximale Höhenverringerung bestimmt wird, die für das BEV-Fahrzeug verfügbar ist.

2. Energiemanagementsystem nach Anspruch 1, wobei das zweite Höhenniveau ein fester Wert ist, der während des Fahrens nicht aktualisiert wird.

3. Energiemanagementsystem nach Anspruch 1, wobei das erste Höhenniveau von einer Reibungsbremskapazität abhängig ist.

4. Energiemanagementsystem nach einem der vorhergehenden Ansprüche, wobei dann, wenn sich das Fahrzeug oberhalb des ersten Höhenniveaus befindet, eine maximale Bremskraft reduziert wird, wenn ein tatsächlicher Ladezustand der Batterie oberhalb eines vom Sollwertregler geregelten maximalen Ladezustands liegt.

5. Energiemanagementsystem nach einem der vorhergehenden Ansprüche, wobei das erste Höhenniveau in einem Bereich zwischen 50 und 300 m liegt.

6. Energiemanagementsystem nach einem der vorhergehenden Ansprüche, wobei das zweite Höhenniveau in einem Bereich zwischen 1500 und 1700 m liegt.

7. Energiemanagementsystem nach einem der vorhergehenden Ansprüche, wobei der Ladezustandssollwert durch einen Batteriezustandsparameter kompensiert wird, der für die potenziell freie Batteriekapazität bezeichnend ist.

8. Energiemanagementsystem nach einem der vorhergehenden Ansprüche, wobei dann, wenn sich das Fahrzeug zwischen der ersten und der zweiten Höhe befindet, der Ladezustandssollwert mit einer festen Höhenrate abgesenkt wird.

9. Energiemanagementsystem nach Anspruch 6, wobei für einen ersten Höhenbereich zwischen dem ersten und einem dritten Höhenniveau, wobei das dritte Niveau zwischen dem ersten und zweiten Höhenniveau liegt, der Ladezustandssollwert mit einer größeren Höhenrate abgesenkt wird als für einen zweiten Höhenniveaubereich, der zwischen dem dritten und zweiten Höhenniveau variiert.

10. Energiemanagementsystem nach Anspruch 9, wobei das dritte Höhenniveau in einem Bereich zwischen 350 und 450 m liegt.

11. Energiemanagementsystem nach einem der vorhergehenden Ansprüche, wobei die Suchfunktion von einer tatsächlichen geografischen Position abhängt, die von einem Überwacher der geografischen Position bestimmt wird.

12. Energiemanagementsystem nach Anspruch 11, wobei die geografische Position mit einer Höhenkarte in Verbindung steht, um die Höhenlage des Fahrzeugs basierend auf der geografischen Position zu bestimmen.

13. Energiemanagementsystem nach Anspruch 11 oder 12, wobei die Suchkarte, die die tatsächliche Fahrzeughöhenlage mit einem Ladezustandssollwert verknüpft, für eine vorbestimmte Anzahl geografischer Positionen wahlweise geändert werden kann.

14. Energiemanagementsystem nach einem der vorhergehenden Ansprüche, wobei die Ladezustandssollwertregelung den Ladezustandssollwert ferner als Funktion eines tatsächlichen Fahrzeugzustands berechnet, der von einer Fahrzeugzustandssteuerung bestimmt wird, einschließlich einer Angabe von Umgebungstemperatur, Witterungsbedingungen, Gewicht des Fahrzeugs, Nutzlast des Fahrzeugs, Achskonfiguration des Fahrzeugs, Rollwiderstand, Luftwiderstand, voraussichtliche Fahrzeuggeschwindigkeit, voraussichtliche Ladezeit, voraussichtliche GPS-Trajektorie, voraussichtliche Lage von Umweltzonen, voraussichtliche Standorte von Plug-in-Ladestationen, voraussichtlicher Straßentyp, voraussichtliche Straßenverhältnisse oder andere Merkmale im Zusammenhang mit der Charakterisierung von Straßen und Plug-in-Ladestationen; Angabe der nutzbaren Energiekapazität der wiederaufladbaren Energiequelle, Daten über die Lade- und Entladeleistung der wiederaufladbaren Energiequelle, Effizienzdaten für das Laden/Entladen der wiederaufladbaren Energiequelle, Temperatur der wiederaufladbaren Energiequelle oder andere Merkmale im Zusammenhang mit der Charakterisierung der wiederaufladbaren Energiequelle.

15. Energiemanagementsystem nach Anspruch 12, ferner angeordnet zum Steuern eines Energiebudgets zusätzlicher nicht motorischer elektrischer Versorgungseinrichtungen, einschließlich eines elektrischen Lenksystems, eines elektrischen Luftkompressors, eines Kabinenheizungs-/Kühlsystems, von Pumpen und Lüftern eines Fahrzeugthermosystems oder des Energieverbrauchs anderer Hilfseinrichtungen, wobei auch optionale elektrische Verbraucher für spezifische Fahrzeugzwecke wie eine Kühleinheit für Kühltransporte und Abfallsammeleinheiten berücksichtigt werden.

## Revendications

1. Système de gestion de l'énergie (100) pour un véhicule électrique à batterie (BEV) (100) comprenant un
groupe motopropulseur électrique alimenté par une batterie électrique (500), ledit système de gestion
de l'énergie comprenant un contrôleur de point de consigne d'état de charge (SOC) (600), ledit SOC
contrôleur de point de consigne conçu pour contrôler, lors de la charge de la batterie, un niveau de charge maximal de la batterie en fonction d'une altitude orthométrique, afin de conserver une capacité de batterie libre pour compenser l'énergie potentielle à stocker dans la batterie en raison du freinage par récupération, le point de consigne SOC étant contrôlé en fonction d'une carte de consultation (630) qui associe l'altitude réelle du véhicule à un point de consigne SOC (635), **caractérisé en ce que** la carte de consultation est
munie d'une fonction de consultation qui détermine le niveau de charge maximal à 100 % lorsque le véhicule se trouve à une altitude inférieure à un premier niveau d'altitude ; dans lequel la fonction de consultation abaisse le point de consigne SOC en fonction de l'altitude du véhicule lorsque le véhicule est au-dessus du premier niveau d'altitude ; et dans lequel la fonction de consultation maintient le point de consigne SOC à une valeur constante, lorsque le véhicule est au-dessus d'un deuxième niveau d'altitude le point de consigne SOC, la deuxième altitude étant déterminée par une descente d'altitude maximale qui est disponible pour le véhicule BEV.

2. Système de gestion de l'énergie selon la revendication 1, dans lequel le deuxième niveau d'altitude est une valeur fixe qui n'est pas mise à jour pendant la conduite.

3. Système de gestion de l'énergie selon la revendication 1, dans lequel le premier niveau d'altitude dépend de la capacité du frein à friction.

4. Système de gestion de l'énergie selon l'une quelconque des revendications précédentes, dans lequel, lorsque le véhicule est au-dessus du premier niveau d'altitude, une force de freinage maximale est réduite lorsqu'un état de charge réel de la batterie est supérieur à un niveau de charge maximal contrôlé par le contrôleur de point de consigne.

5. Système de gestion de l'énergie selon l'une quelconque des revendications précédentes, dans lequel le premier niveau d'altitude est compris entre 50 et 300 m.

6. Système de gestion de l'énergie selon l'une quelconque des revendications précédentes, dans lequel le deuxième niveau d'altitude est compris entre 1 500 et 1 700 m.

7. Système de gestion de l'énergie selon l'une quelconque des revendications précédentes, dans lequel le point de consigne SOC est compensé par un paramètre d'état de santé de la batterie, indiquant la capacité potentielle libre de la batterie.

8. Système de gestion de l'énergie selon l'une quelconque des revendications précédentes, dans lequel, lorsque le véhicule se trouve entre la première et la deuxième altitude, le point de consigne SOC est abaissé à un taux d'altitude fixe.

9. Système de gestion de l'énergie selon la revendication 6, dans lequel, pour une première plage d'altitude comprise entre le premier et un troisième niveau d'altitude, ce troisième niveau se situant entre le premier et le deuxième niveau d'altitude, le point de consigne SOC est abaissé à un taux d'altitude plus élevé que pour une deuxième plage de niveau d'altitude variant entre le troisième et le deuxième niveau d'altitude.

10. Système de gestion de l'énergie selon la revendication 9, dans lequel le troisième niveau d'altitude est compris entre 350 et 450 m.

11. Système de gestion de l'énergie selon l'une quelconque des revendications précédentes, dans lequel la fonction de recherche dépend d'une localisation géographique réelle déterminée par un contrôleur de localisation géographique.

12. Système de gestion de l'énergie selon la revendication 11, dans lequel l'emplacement géographique est lié à une carte d'altitude pour déterminer l'altitude du véhicule en fonction de l'emplacement géographique.

13. Système de gestion de l'énergie selon la revendication 11 ou 12, dans lequel la carte de consultation qui associe l'altitude réelle du véhicule à un point de consigne SOC peut être modifiée de manière sélective pour un nombre prédéterminé de lieux géographiques.

14. Système de gestion de l'énergie selon l'une quelconque des revendications précédentes, dans lequel le contrôleur de point de consigne SOC calcule en outre le point de consigne SOC en fonction d'un état réel du véhicule déterminé par un contrôleur d'état du véhicule y compris une indication de la température ambiante, des conditions météorologiques, du poids du véhicule, de la charge utile du véhicule, de la configuration des essieux du véhicule, de la résistance au roulement, de la résistance à l'air, de la vitesse prévue du véhicule, du temps de branchement prévu, de la trajectoire GPS prévue, des emplacements prévus des zones vertes, des emplacements prévus des stations de recharge, du type de route prévu, des conditions routières prévues, ou d'autres attributs liés à la caractérisation de la route et de la station de recharge ; indication de la capacité énergétique utilisable de la source d'énergie rechargeable, des données sur les capacités de charge et de décharge de la source d'énergie rechargeable, des données d'efficacité pour la charge/décharge de la source d'énergie rechargeable, de la température de la source d'énergie rechargeable, ou autres attributs liés à la caractérisation de la source d'énergie rechargeable.

15. Le système de gestion de l'énergie selon la revendication 12, en outre conçu pour contrôler un budget énergétique d'utilités électriques non motrices supplémentaires incluant n'importe lequel parmi le système de direction électrique, le compresseur d'air électrique, le système de chauffage/refroidissement de l'habitacle, les pompes et les ventilateurs du système thermique du véhicule, ou la consommation d'énergie d'autres auxiliaires s'adressant également à des charges électriques optionnelles destinées à des usages spécifiques du véhicule telles que l'unité de refroidissement pour le transport réfrigéré et les unités de collecte des déchets.
